# EUROPEAN PATENT SPECIFICATION

(11) **EP 3 787 070 B1**
(45) Date of publication and mention of the grant of the patent: **12.10.2022**
(21) Application number: 19885692.4
(22) Date of filing: 15.11.2019
(51) Int. Cl.: H01M 4/13, H01M 4/66, H01M 6/14, H01M 10/0525, H01M 10/42, H01M 50/209, H01G 11/24, H01G 11/26, H01G 11/28, H01G 11/32, H01G 11/68, H01G 11/70

(54) **POSITIVE ELECTRODE PLATE AND ELECTROCHEMICAL DEVICE**
POSITIVELEKTRODENPLATTE UND ELEKTROCHEMISCHE VORRICHTUNG
PLAQUE D'ÉLECTRODE POSITIVE ET DISPOSITIF ÉLECTROCHIMIQUE

(30) Priority: 16.11.2018 CN 201811365369
(43) Date of publication of application: 03.03.2021
(73) Proprietor: Contemporary Amperex Technology Co., Limited, Ningde City, Fujian 352100 (CN)
(72) Inventor: JIN, Haizu, Ningde, Fujian 352100 (CN); LI, Zhenhua, Ningde, Fujian 352100 (CN); LI, Xing, Ningde, Fujian 352100 (CN)
(74) Representative: Valea AB
(86) International application number: PCT/CN2019/118844
(87) International publication number: WO 2020/098792

(56) References cited:
- EP-A1- 3 483 900
- EP-A1- 3 654 419
- EP-A1- 3 654 426
- EP-A1- 3 694 027
- CN-A- 102 176 360
- CN-A- 102 881 861
- CN-A- 106 450 327
- CN-A- 107 437 622
- CN-A- 107 437 622
- JP-A- 2010 238 588
- JP-A- 2018 116 810
- KR-A- 20180 065 167

## Description

### TECHNICAL FIELD

This application relates to the technical field of electrochemical technology, and more particularly relates to a positive electrode plate and an electrochemical device comprising such positive electrode plate.

### BACKGROUND

Lithium ion batteries are widely used in electric vehicles and consumer electronics because of their advantages such as high energy density, high output power, long cycle life and small environmental pollution. However, lithium ion batteries are prone to fire and explode when subjected to abnormal conditions such as crushing, bumping or puncture, causing serious harm. Therefore, the safety problem of lithium ion batteries greatly limits the application and popularity of lithium ion batteries.

A large number of experimental results show that internal short circuit of lithium ion battery is the basic cause of the battery's safety hazard. In order to avoid the internal short-circuit of the battery, researchers have tried to improve the battery in many ways, including the use of PTC materials to improve the safety performance of lithium ion battery. A PTC (Positive Temperature Coefficient) material is a positive temperature coefficient heat sensitive material, which has the characteristic that its resistivity increases with increasing temperature. When the temperature exceeds a certain temperature, the resistivity of the PTC material increases rapidly stepwise.

In the study of utilizing the characteristics of PTC materials to improve the safety performance of lithium ion battery, some studies involve addition of PTC materials to the electrode active material layer of the battery. When the temperature of the battery rises, the resistance of the PTC material increases, thereby causing the resistance of the entire electrode active material layer to become large, and even destroying the conductive path of the entire electrode active material layer. Thus the security effect is achieved by causing power interruption and preventing the electrochemical reaction from proceeding. However, with this modification, the PTC material added in the electrode active material layer adversely affects the electrochemical performance of the battery.

Still other studies have provided a separate layer of PTC material (safety coating) between the current collector and the electrode active material layer of the battery. When the temperature of the battery rises, the resistance of the PTC material layer increases, so that the electric resistance between the current collector and the electrode active material layer is increased or even power supply is interrupted, thereby achieving the security effect of preventing the electrochemical reaction from proceeding. However, with this modification, when an active material slurry is coated on the surface of the PTC material layer, the solvent (such as NMP) in the slurry would dissolve the PTC material of the PTC layer and thus the dissolved PTC material enters the upper active material layer, which not only destroys the PCT effect of the PTC layer and also deteriorates its electrical performance. In addition, in the compacting step of the plate fabrication process, the PTC material layer is easily squeezed to the edge and thus the electrode active material layer would directly contact the current collector, so that the PTC material layer cannot improve the safety performance. In addition, it is required to greatly improve the performance of the PTC material layer, such as the response speed, the effect of blocking current.

CN 107437622 A discloses an electrode and a preparation method thereof. The electrode comprises a current collector, an active material layer disposed on the current collector, and a coating disposed between the current collector and the active material layer. The coating comprises a polymer matrix and a conductive agent. The electrode has the advantages of low resistance at room temperature and high PTC strength.

JP 2018116810 A discloses an all-solid battery capable of suppressing reduction of electric resistance caused by overheat. The all-solid battery comprises a positive electrode layer, a negative electrode layer and a solid electrolyte layer. The all-solid battery also comprises a PTC layer between a cathode active material layer and a cathode collector of the positive electrode layer and/or between an anode active material layer and an anode collector of the negative electrode layer.

JP 2010238588 A discloses a current collector laminate capable of protecting a current collector from corrosion without impairing battery characteristics even in a high voltage specification and not impairing flexibility of an electrode, and provide a lithium secondary battery. The current collector laminate is provided with a conductive protecting layer containing a cross-linked fluorine containing elastomer and a conductive filler arranged on a current collector. The lithium secondary battery includes the above laminate.

CN 102176360 A discloses a PTC thermistor comprises a base material and two metal foil electrodes compounded on both sides of the base material. The base material is composed of the following weight percentage components: 28-55% of polymer material; 22-32% of conductive filler; 13-46% of auxiliary filler; 1-5% of processing aids. The PTC thermistor has high PTC strength and strong resistance to multiple shocks of large current.

In view of this, it is indeed necessary to provide an electrode plate and a battery with improved safety and battery performance (such as cycle performance), which is/are capable of solving the above problems.

### SUMMARY

It is an object of this application to provide an electrode plate and an electrochemical device with improved safety and electrical performance.

The present application provides a positive electrode plate in accordance with claim 1. Based on the total weight of the polymer matrix, the conductive material and the inorganic filler, the polymer matrix is present in an amount of from 35 wt% to 75 wt% and preferably from 50 wt% to 75 wt%, the conductive material is present in an amount of from 5 wt% to 25 wt% and preferably from 5 wt% to 20 wt%, and the inorganic filler is present in an amount of from 10 wt% to 60 wt% and preferably from 15 wt% to 45 wt%.

The application also provides an electrochemical device including the positive electrode plate according to present application, wherein the electrochemical device is preferably a capacitor, a primary battery or a secondary battery.

### DESCRIPTION OF THE DRAWINGS

The positive electrode plate and the electrochemical device of this application as well as the beneficial effects thereof will be described in details below with reference to the accompanying drawings and specific embodiments.
Fig. 1 is a schematic structural view of a positive electrode plate according to an embodiment of this application, in which 10 - a current collector; 14 - a positive electrode active material layer; 12 - a safety coating (i.e. a PTC safety coating).
Fig. 2 is a perspective view of an embodiment of a lithium ion battery.
Fig. 3 is an exploded view of Fig.2.
Fig. 4 is a perspective view of an embodiment of a battery module.
Fig. 5 is a perspective view of an embodiment of a battery pack.
Fig. 6 is an exploded view of Fig. 5.
Fig. 7 is a schematic view showing an embodiment of a device wherein a lithium ion battery is used as a power source.

In the drawings, the reference numerals are defined as follows:
1 battery pack
2 upper cabinet body
3 lower cabinet body
4 battery module
5 battery
   51 case
   52 electrode assembly
   53 top cover assembly.

### DETAILED DESCRIPTION

The present application describes a positive electrode plate, comprising a current collector, a positive electrode active material layer and a safety coating disposed between the current collector and the positive electrode active material layer; the safety coating comprises a fluorinated polyolefin and/or chlorinated polyolefin polymer matrix having a crosslinked structure, a conductive material and an inorganic filler.

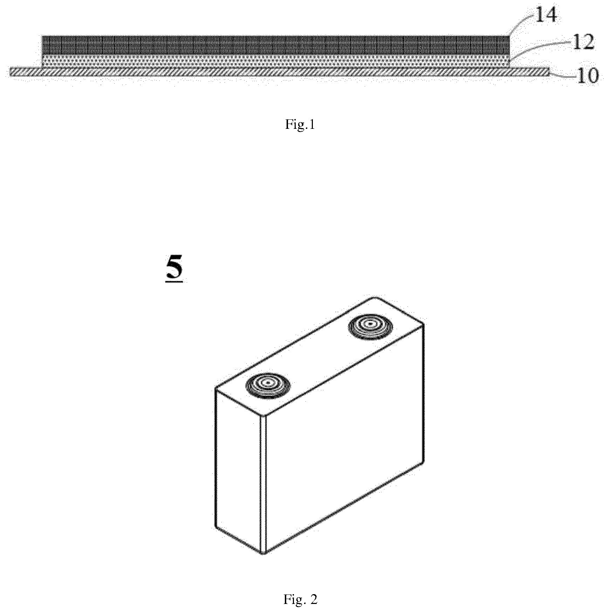

Fig. 1 shows a schematic structural view of a positive electrode plate according to some embodiments of this application, in which 10 - a current collector; 14 - a positive electrode active material layer; 12 - a safety coating (i.e. a PTC safety coating).

It is easily understood that although the PTC safety coating 12 and the positive electrode active material layer 14 are provided only on one side of the positive electrode current collector 10 as described in Fig. 1, and in other embodiments, the PTC safety coating 12 and the positive electrode active material layer 14 may be provided on both sides of the positive current collector 10, respectively.

In order to overcome the shortcomings of the PTC safety coating in the prior art, a variety of technical means are used in the present application to coordinately work to improve the performance and stability of the PTC safety coating.

Conventional PTC safety coating comprises a polymer matrix material, a binder, and a conductive material. This safety coating works as below. At normal temperature, the safety coating relies on a good conductive network formed between the conductive materials to conduct electrons conduction. When the temperature rises, the volume of the polymer matrix materials begins to expand, the spacing between the particles of the conductive materials increases, and the conductive network is partially blocked, so that the resistance of the safety coating increases gradually. When a certain temperature for example the operating temperature is reached, the conductive network is almost completely blocked, and the current approaches zero, thereby protecting the electrochemical device that uses the safety coating.

**Firstly, the inventors have found that, the addition of an inorganic filler in safety coating of a positive electrode plate can stabilize the safety coating.**

It has been found that in the case that the safety coating does not contain an inorganic filler, the electrolyte or the solvent (such as NMP) in the positive electrode active material layer over the safety coating adversely dissolves and swells the polymer material in the safety coating, thereby damaging the safety coating and affecting its PTC effect. After adding an inorganic filler to the safety coating, the inorganic filler functions as a barrier, thereby advantageously eliminating the above-mentioned adverse effects such as dissolving and swelling, and thus advantageously stabilizing the safety coating. In addition, it has also been found that the addition of the inorganic filler is also advantageous for ensuring that the safety coating is not easily deformed during compaction of the electrode plate. Therefore, the addition of the inorganic filler can well ensure that the safety coating is stably disposed between the metal current collector and the positive electrode active material layer and that the metal current collector is prevented from directly contacting with the positive electrode active material layer, thereby improving safety performance of the battery.

In summary, the inorganic filler can function as stabilizing the safety coating from the following two aspects: (1) hindering the electrolyte or the solvent (such as NMP) of the positive electrode active material layer from dissolving or swelling the polymer material of the safety coating; and (2) being conducive to guaranteeing that the safety coating is not easily deformed during the plate compaction process.

Surprisingly, the inventors have also found that inorganic fillers can also improve the performance such as the response speed of the safety coating. The safety coating works as below. At normal temperature, the safety coating relies on a good conductive network formed between the conductive materials to conduct electron conduction. When the temperature rises, the volume of the polymer matrix materials begins to expand, the spacing between the particles of the conductive materials increases, and the conductive network is partially blocked, so that the resistance of the safety coating increases gradually. When a certain temperature for example the operating temperature is reached, the conductive network is almost completely blocked, and the current approaches zero. However, usually the conductive network is partially recovered, when the inside of the safety coating reaches a dynamic balance. Therefore, after reaching a certain temperature for example, the operating temperature, the resistance of the safety coating is not as large as expected, and still there is very small current flowing through. The inventors have found that after the inorganic filler is added and the volume of the polymer matrix materials expands, the inorganic filler and the expanded polymer matrix material can function to block the conductive network. Therefore, after the addition of the inorganic filler, the safety coating can better produce PTC effect in the operating temperature range. That is to say, the increasing speed of resistance is faster and the PTC response speed is faster at a high temperature. As a result, the safety performance of battery can be improved better.

The inorganic filler may be selected from at least one of metal oxides, non-metal oxides, metal carbides, non-metal carbides, and inorganic salts, all optionally modified with at least one of a conductive carbon coating, a conductive metal coating or a conductive polymer coating.

**Secondly, the inventors have found that, the stability of safety coating and safety performance and electrochemical performance of a battery can be further improved by subjecting the polymer matrix in the safety coating to crosslinking treatment.**

The inventors have surprisingly found that, the crosslinking treatment may be more advantageous for hindering the adverse effects of a solvent (such as NMP) in the positive electrode active material layer or an electrolyte on the polymer material in the safety coating, such as dissolving or swelling, and for preventing the positive electrode active material layer from cracking due to uneven stress.

In addition, the polymer matrix which is not subjected to crosslinking treatment has relatively large swelling in the electrolyte, causing a relatively large DCR (DC internal resistance) growth of battery, which is disadvantageous to improvement of the kinetic performance of battery. After being subjected to crosslinking treatment, the swelling ratio of the polymer matrix is effectively suppressed, so that the DCR growth due to introduction of the safety coating can be remarkably reduced.

The procedure of the crosslinking treatment is known in the art. For example, for a fluorinated polyolefin and/or chlorinated polyolefin polymer matrix, the crosslinking treatment is achieved by introducing an activator and a crosslinking agent. The function of the activator is to remove the HF or HCl from the fluorinated polyolefin and/or chlorinated polyolefin to form a C=C double bond; the crosslinking agent acts to crosslink the C=C double bond. As an activator, a strong base-weak acid salt such as sodium silicate or potassium silicate can be used. The weight ratio of the activator to the polymer matrix is usually from 0.5% to 5%. The crosslinking agent is selected from at least one of polyisocyanates (JQ-1, JQ-1E, JQ-2E, JQ-3E, JQ-4, JQ-5, JQ-6, PAPI, emulsifiable MDI, tetraisocyanate), polyamines (propylenediamine, MOCA), polyols (polyethylene glycol, polypropylene glycol, trimethylolpropane), glycidyl ethers (polypropylene glycol glycidyl ether), inorganic substances (zinc oxide, aluminum chloride, aluminum sulfate, sulfur, boric acid, borax, chromium nitrate), glyoxal, aziridine, organosilicons (ethyl orthosilicate, methyl orthosilicate, trimethoxysilane), benzenesulfonic acids (p-toluenesulfonic acid, p-toluenesulfonyl chloride), olefinically unsaturated compounds (styrene, α-methylstyrene, acrylonitrile, acrylic acid, methacrylic acid, acrylates (1,4-butylene glycol diacrylate, ethylene glycol dimethacrylate, triallyl cyanurate (TAC), butyl acrylate, 2-hydroxyethyl acrylate (HEA), hydroxypropyl acrylate (HPA), 2-hydroxyethyl methacrylate (HEMA), 2-hydroxypropyl methacrylate (HPMA), methyl methacrylate (MMA))), organic peroxides (dicumyl peroxide, bis(2,4-dichlorobenzoyl) peroxide), and metal organic compounds (aluminum isopropoxide, zinc acetate, titanium acetylacetonate).

The weight ratio of the crosslinking agent to the polymer matrix is from 0.01% to 5%. If too little crosslinking agent is used, the crosslinking degree of the polymer matrix is low, and the cracking cannot be completely eliminated. If excessive crosslinking agent is used, it is easy to cause gel during stirring. The activator and the crosslinking agent may be added after the stirring of the slurry for preparing the safety coating is completed, then performing the crosslinking reaction, the mixture is uniformly stirred and then coated to prepare a safety coating.

Therefore, the combination of introducing inorganic filler into PTC safety coating and crosslinking the polymer matrix can improve the performance and stability of PTC safety coating, and improve the electrical performance and safety performance (particularly the nail penetration safety performance) of the electrochemical device.

In the present application, the safety coating comprises a polymer matrix material, a conductive material, an inorganic filler and optionally a binder. The components of the safety coating will be described hereafter.

### Inorganic filler

The inorganic filler is typically present in a weight percentage of from 10 wt% to 60 wt% based on the total weight of the polymer matrix material, a conductive material, and an inorganic filler. If the content of the inorganic filler is too small, it will not be enough to stabilize the safety coating; if the content is too large, it will affect the PTC performance of the safety coating. The weight percentage of the inorganic filler is preferably from 15 wt% to 45 wt%.

The inorganic filler is selected from at least one of metal oxides, non-metal oxides, metal carbides, non-metal carbides, and inorganic salts, all optionally modified with at least one of a conductive carbon coating, a conductive metal coating or a conductive polymer coating.

For example, the inorganic filler may be selected from at least one of magnesium oxide, aluminum oxide, titanium dioxide, zirconium oxide, silicon dioxide, silicon carbide, boron carbide, calcium carbonate, aluminum silicate, calcium silicate, potassium titanate, barium sulfate, lithium cobalt oxide, lithium manganese oxide, lithium nickel oxide, lithium nickel manganese oxide, lithium nickel manganese cobalt oxide, lithium nickel manganese aluminum oxide, lithium iron phosphate, lithium vanadium phosphate, lithium cobalt phosphate, lithium manganese phosphate, lithium iron silicate, lithium vanadium silicate, lithium cobalt silicate, lithium manganese silicate, and lithium titanate, all optionally modified with at least one of a conductive carbon coating, a conductive metal coating or a conductive polymer coating. Especially, the inventors have found that it is particularly advantageous when a positive electrode electrochemically active material optionally modified with a conductive carbon coating, a conductive metal coating or a conductive polymer coating is used as an inorganic filler in the case that the safety coating is used for a positive electrode plate. In such a case, in addition to above mentioned functions as stabilizing the safety coating (hindering organic solvent from adverse effects such as dissolving or swelling the polymer material and ensuring that the safety coating is not easily deformed), and as improving the performance such as the response speed and the like of the safety coating, the inorganic filler may further play the following two roles:
(1) To improve the overcharge performance of the battery. In the PTC safety coating system composed of a polymer matrix and a conductive material, since the electrochemically active material has the characteristics of lithium ion intercalation and de-intercalation, the electrochemically active material can be used as "active sites" in the conductive network at the normal operating temperature of the battery and thus the number of "active sites" in the safety coating is increased. In the process of overcharging, the electrochemically active material will delithiate, and the de-lithiating process has become more and more difficult, and the impedance is increasing. Therefore, when the current passes, the heat-generating power increases, and the temperature of the primer layer increases faster, so the PTC effect responds faster, which in turn can generate PTC effects before the overcharge safety problem in battery. Thus the overcharge safety performance of a battery may be improved.
(2) To contribute to charge and discharge capacity. Since the electrochemically active material can contribute to a certain charge and discharge capacity at the normal operating temperature of the battery, the effect of the safety coating on the electrochemical performance such as capacity of the battery at the normal operating temperature can be minimized.

Therefore, for a positive electrode plate, it is the most preferred to use a positive electrode electrochemically active material optionally modified with a conductive carbon coating, a conductive metal coating or a conductive polymer coating as the inorganic filler of the safety coating. The positive electrode electrochemically active material is preferably selected from at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, and lithium titanate, all optionally modified with at least one of a conductive carbon coating, a conductive metal coating, and a conductive polymer coating. Especially, it is at least one of the above electrochemically active materials modified with a conductive carbon coating, such as a conductive carbon coating modified lithium cobalt oxide, a conductive carbon coating modified lithium nickel manganese cobalt oxide, a conductive carbon coating modified lithium nickel manganese aluminate, a conductive carbon coating modified lithium iron phosphate, a conductive carbon coating modified lithium vanadium phosphate, a conductive carbon coating modified lithium cobalt phosphate, a conductive carbon coating modified lithium manganese phosphate, a conductive carbon coating modified lithium manganese iron phosphate, a conductive carbon coating modified lithium iron silicate, a conductive carbon coating modified lithium vanadium silicate, a conductive carbon coating modified lithium cobalt silicate, a conductive carbon coating modified lithium manganese silicate, a conductive carbon coating modified spinel lithium manganese oxide, a conductive carbon coating modified spinel lithium nickel manganese oxide, a conductive carbon coating modified lithium titanate. These electrochemically active materials and conductive carbon coating modified electrochemically active materials are commonly used materials in the manufacture of lithium batteries, most of which are commercially available. The type of conductive carbon may be graphite, graphene, conductive carbon black, carbon nanotubes or the like. Further, the conductivity of the inorganic filler can be adjusted by adjusting the content of the conductive carbon coating.

In addition, the inventors have found that, when the particle size of the inorganic filler is too small, the specific surface area increases, and the side reaction increases; when the particle size is too large, the coating thickness of the safety coating is too large and the thickness is uneven. Preferably, the average particle size D of the inorganic filler in the safety coating satisfies 100 nm ≤D≤10 µm, and more preferably 1 µm ≤D≤6 µm. When the particle size of the inorganic filler is in the above ranges, the effect of blocking the conductive network at a high temperature can be improved, thereby improving the response speed of the safety coating.

Further preferably, the inorganic filler in the safety coating has a specific surface area (BET) of not more than 500 m²/g. The inventors have found that, when the specific surface area of the inorganic filler increases, side reaction will increase and thus the battery performance will be affected. Moreover, in the case that the specific surface area of the inorganic filler is too large, a higher proportion of binder will be consumed, which will cause the binding force among the safety coating, the current collector and the positive electrode active material layer to be reduced and the growth rate of the internal resistance to be high. When the specific surface area (BET) of the inorganic filler is not more than 500 m²/g, a better overall effect can be provided.

As a further improvement of the present invention, when the conductivity σ of the inorganic filler satisfies 10⁻³ S/m ≤ σ ≤ 10² S/m, there is an additional benefit. The inventors have found that the addition of inorganic fillers can affect the electrical conductivity of the safety coating, which in turn may affect the electrical conductivity of the entire plate. When the conductivity σ of the inorganic filler satisfies 10⁻³ S/m ≤ σ ≤ 10² S/m, the electrical conductivity of the safety coating at the normal use temperature of the battery can be improved. If the conductivity σ of the inorganic filler is too small, the initial internal resistance and the growth rate of the internal resistance of the safety coating will be very high; if σ is too high, the conductive network will not be cut off easily at the PTC operating temperature and thus the PTC material layer cannot works well. Within the above conductivity range, the internal resistance and its growth rate of the battery during normal use are very low, and the conductive network can be quickly disconnected when an internal short circuit or a high temperature condition occurs. A skilled person in the art would understand that if some inorganic fillers do not have a conductivity σ satisfying 10⁻³ S/m ≤ σ ≤ 10² S/m, a conductivity satisfying 10⁻³ S/m ≤ σ ≤ 10² S/m can be obtained by modifying with common materials in the art.

### Conductive material

In the present application, safety coating works as below. At normal temperature, the safety coating relies on a good conductive network formed between the conductive materials to conduct electrons conduction. When the temperature rises, the volume of the polymer matrix materials begins to expand, the spacing between the particles of the conductive materials increases, and the conductive network is partially blocked, so that the resistance of the safety coating increases gradually. When a certain temperature for example the operating temperature is reached, the conductive network is almost completely blocked, and the current approaches zero, thereby protecting the electrochemical device that uses the safety coating. Therefore, the amount of conductive material is important for the PTC layer to function properly.

Based on the total weight of the polymer matrix, the conductive material and the inorganic filler, the conductive material is present in an amount of from 5 wt% to 25 wt% and preferably from 5 wt% to 20 wt%. In addition, the weight ratio of the polymer matrix material to the conductive material is preferably 2 or more. The conductive material may be selected from at least one of a conductive carbon-based material, a conductive metal material, and a conductive polymer material. As illustrative examples, the conductive carbon-based material may be selected from at least one of conductive carbon black, acetylene black, graphite, graphene, carbon nanotubes, carbon nanofibers; the conductive metal material is selected from at least one of Al powder, Ni powder, and gold powder; and the conductive polymer material may be selected from at least one of conductive polythiophene, conductive polypyrrole, and conductive polyaniline. The conductive material may be used alone or in combination of two or more.

Conductive materials are typically used in the form of powders or granules. The particle size may be from 5 nm to 500 nm, for example, from 10 nm to 300 nm, from 15 nm to 200 nm, from 15 nm to 100 nm, from 20 nm to 400 nm, or from 20 nm to 150 nm, depending on the specific application environment.

### Polymer matrix material and binder

In the present application, the polymer matrix material as the safety coating is a polymer matrix material having a crosslinked structure, preferably fluorinated polyolefin and/or chlorinated polyolefin having a crosslinked structure. The fluorinated polyolefin and/or chlorinated polyolefin is preferably polyvinylidene fluoride (PVDF), polyvinylidene chloride (PVDC), modified PVDF, modified PVDC or any combination thereof. For example, the polymer matrix material may be selected from PVDF, carboxylic acid modified PVDF, acrylic acid modified PVDF, PVDF copolymers, PVDC, carboxylic acid modified PVDC, acrylic acid modified PVDC, PVDC copolymers or any mixture thereof.

The amount of the polymer matrix is from 35 wt% to 75 wt%, preferably from 40wt% to 75 wt%, more preferably from 50 wt% to 75 wt%, based on the total weight of the polymer matrix, the conductive material, and the inorganic filler.

In the conventional coating having PTC effect for use in batteries, polyethylene, polypropylene or ethylene propylene copolymers or the like is generally used as the PTC matrix material. In this case, it is necessary to additionally add a binder to the PTC matrix material and the conductive material. If the binder content is too small, the binding force between the coating and the metal current collector is poor; and if the binder content is too large, the performance such as the response temperature and response speed of the PTC effect are affected. The inventors have found that instead of using a conventional PTC matrix material such as polyethylene, polypropylene or ethylene propylene copolymers, a large amount of fluorinated polyolefin and/or chlorinated polyolefin is used between the metal current collector and the positive electrode active material layer, and can still function as a PTC thermistor layer and help eliminate the problems faced by existing PTC safety coatings. Therefore, it is more preferable to use a fluorinated polyolefin and/or a chlorinated polyolefin as the polymer matrix material.

Fluorinated polyolefin or chlorinated polyolefin (such as PVDF) is conventionally used as a binder. When used as a binder, the amount of PVDF is much less than the amount of the matrix material. For example, the PVDF binder in conventional PTC coatings is typically present in an amount of less than 15% or 10%, or even less, relative to the total weight of the coating. In the present application, the fluorinated polyolefin and/or chlorinated polyolefin may be used as a polymer matrix material, in an amount that is much higher than the amount of the binder. For example, the weight percentage of the fluorinated polyolefin and/or chlorinated polyolefin as the polymer matrix material is from 35 wt% to 75 wt%, based on the total weight of the safety coating.

In the present safety coating, the fluorinated polyolefin and/or chlorinated polyolefin material actually functions both as a PTC matrix and as a binder. This avoids the influence on the adhesion of the coating, the response speed, and the response temperature of the PTC effect due to the difference between the binder and the PTC matrix material.

Firstly, the safety coating composed of fluorinated polyolefin and/or chlorinated polyolefin material and a conductive material can function as a PTC thermistor layer and its operating temperature range is suitably from 80 °C to 160 °C. Thus the high temperature safety performance of the battery may be improved well.

Secondly, fluorinated polyolefin and/or chlorinated polyolefin as the polymer matrix material of the safety coating serves as both a PTC matrix and a binder, thereby facilitating the preparation of a thinner safety coating without affecting the adhesion of the safety coating.

In addition, the solvent (such as NMP) or the electrolyte in the positive electrode active material layer over the safety coating may have an adverse effect such as dissolution and swelling on the polymer material of the safety coating. For the safety coating containing PVDF in a conventional binder amount, the adhesion would be easily getting worse. For the safety coating containing relatively high amount of fluorinated polyolefin and/or chlorinated polyolefin, the above adverse effect is relatively slight.

The weight percentage of the fluorinated polyolefin and/or chlorinated polyolefin polymer matrix is from 35 wt% to 75 wt%, based on the total weight of the safety coating. If the content is too small, the polymer matrix cannot ensure the safety coating works well in terms of its PTC effect; and if the content is too high, it will affect the performance including the response speed and the like of the safety coating. The weight percentage of the fluorinated polyolefin and/or chlorinated polyolefin polymer matrix is preferably from 40 wt% to 75 wt%, more preferably from 50 wt% to 75 wt%.

### Safety coating

The safety coating can be formed by a conventional method. For example, a desired safety coating may be obtained by dissolving a polymer matrix material, a conductive material, a inorganic filler and optionally a binder or other auxiliary agents (such as a crosslinking agent) in a solvent under stirring to form a slurry, applying the slurry onto the current collector followed by heating and drying.

In the positive electrode plate of the present application, the safety coating is directly adhered onto current collector and disposed between current collector and positive electrode active material layer. The thickness H of the safety coating can be reasonably determined according to actual needs. The thickness H of the safety coating is usually not more than 40 µm, preferably not more than 25 µm, more preferably not more than 20 µm, 15 µm or 10 µm. The thickness of the safety coating is usually greater than or equal to 1 µm, preferably greater than or equal to 2 µm, and more preferably greater than or equal to 3 µm. If the thickness is too small, it is not enough to ensure that the safety coating has the effect of improving safety performance of the battery; if it is too large, the internal resistance of the battery will increase seriously, which will affect electrochemical performance of the battery during normal operation. Preferably, 1 µm ≤ H ≤ 20 µm, more preferably 3 µm ≤ H ≤ 10 µm.

The bonding force between the safety coating and the current collector is preferably at least 10 N/m. Larger bonding force can improve nail penetration safety performance of a battery. For example, the bonding force between the safety coating and the current collector can be increased by introducing an additional binder or by crosslinking the polymer matrix.

When a fluorinated polyolefin and/or chlorinated polyolefin polymer matrix materials is used in the safety coating, these materials themselves have good adhesion and can be used as a binder, in addition to being used as a matrix material. Therefore, when such polymer matrix materials are used, the safety coating does not have to contain other additional binders, which can simplify the process and save costs. Therefore, in a preferred embodiment of the present application, the polymer matrix is fluorinated polyolefin and/or a chlorinated polyolefin, and the safety coating is substantially free of other polymer matrix materials or binders than the matrix material (the phrase "substantially free" means ≤ 3%, ≤ 1%, or ≤ 0.5%). However, in some other embodiments of the present application, the safety coating may also contain other polymer matrix material or a binder that promotes binding force between the polymer matrix material and the current collector. The binder may be for example PVDF, PVDC, SBR, and also may be an aqueous binder selected from CMC, polyacrylate, water-dispersible PVDF, polycarbonate, polyethylene oxide, rubber, polyurethane, sodium carboxymethyl cellulose, polyacrylic acid, acrylonitrile multicomponent copolymers, gelatin, chitosan, sodium alginate, a coupling agent, cyanoacrylate, a polymeric cyclic ether derivative, a hydroxy derivative of cyclodextrin, and the like

Moreover, in some preferred embodiments of the present application, fluorinated polyolefin and/or chlorinated polyolefin is used as a polymer matrix in the safety coating, and the safety coating may consist substantially of the polymer matrix, the conductive material, and the inorganic filler, in other words, the safety coating is free of a significant amounts (e.g., ≤ 3%, ≤ 1%, or ≤0.5%) of other components.

### Current collector

For the current collector, the common materials in the art, preferably metal current collectors, such as metal flakes or metal foils of stainless steel, aluminum, copper, or titanium can be used. The metal current collector may have a thickness of from 4 µm to 16 µm.

Further, in consideration of the safety performance during nail penetration, the elongation at break δ of the current collector is preferably 0.8%≤δ≤4%. It was found that if the elongation at break of the current collector is too large, the metal burrs will be larger when puncturation, which is not conducive to improving safety performance of the battery. Conversely, if the elongation at break of the current collector is too small, breakage is likely to occur during processing such as plate compaction or when the battery is squeezed or collided, thereby degrading quality or safety performance of the battery. Therefore, in order to further improve safety performance, particularly safety performance during nail penetration, the elongation at break δ of the current collector should be not more than 4% and not less than 0.8%. The elongation at break of the metal current collector can be adjusted by changing purity, impurity content and additives of the metal current collector, the billet production process, the rolling speed, the heat treatment process, and the like.

Preferably, the current collector is a porous aluminum-containing current collector (for example, a porous aluminum foil). Use of a porous aluminum foil can reduce the probability of occurrence of the metal burrs and further reduce the probability of occurrence of a severe aluminothermic reaction in an abnormal situation such as nailing. Therefore, safety performance of the electrochemical device may be further improved. In addition, use of a porous aluminum foil can also improve infiltration of the electrolyte to the electrode plate, and thereby improve the kinetic performance of the lithium ion battery. The safety coating can cover the surface of the porous aluminum foil to prevent leakage of the upper active material layer during the coating process.

### Positive electrode active material layer

As the positive electrode active material layer used for the positive electrode plate of the present application, various conventional positive electrode active material layers known in the art can be used, and the components and preparation method thereof are well known in the art without any particular limitation. The positive electrode active material layer contains a positive electrode active material, and various positive electrode active materials for preparing a lithium ion secondary battery positive electrode known to those skilled in the art may be used. For example, the positive electrode active material is a lithium-containing composite metal oxide, for example one or more of LiCoO₂, LiNiO₂, LiMn₂O₄, LiFePO₄, lithium nickel cobalt manganese oxides (such as LiNi_{0.5}Co_{0.2}Mn_{0.3}O₂) and one or more of lithium nickel manganese oxides.

When the positive electrode electrochemically active material (or a coating modified material thereof) is used as the inorganic filler of the safety coating of the positive electrode plate, the positive electrochemically active material in the safety coating and the positive active material used in the positive electrode active material layer may be the same or different.

### Electrochemical device

The negative electrode plate for use in conjunction with the positive electrode plate of the present application may be selected from various conventional negative electrode plates in the art, and the components and preparation thereof are well known in the art. For example, the negative electrode plate may comprise a negative electrode current collector and a negative electrode active material layer disposed on the negative electrode current collector, and the negative electrode active material layer may comprise a negative electrode active material, a binder, a conductive material, and the like. The negative electrode active material is, for example, a carbonaceous material such as graphite (artificial graphite or natural graphite), conductive carbon black, or carbon fiber; a metal or a semimetal material such as Si, Sn, Ge, Bi, Sn, In, or an alloy thereof; and a lithium-containing nitride or a lithium-containing oxide, a lithium metal or a lithium aluminum alloy.

The present application also discloses an electrochemical device comprising the positive electrode plate according to the present application. The electrochemical device may be a capacitor, a primary battery, or a secondary battery. For example, it may be a lithium ion capacitor, a lithium ion primary battery, or a lithium ion secondary battery. Except for the use of the positive electrode plate of the present application, the construction and preparation methods of these electrochemical devices are known per se. The electrochemical device can have improved safety (e.g. nail penetration safety) and electrical performance due to the use of the positive electrode plate of the present application. Further, since the positive electrode plate of the present application is easy to manufacture, the manufacturing cost of the electrochemical device can be reduced due to use of the positive electrode plate of the present application.

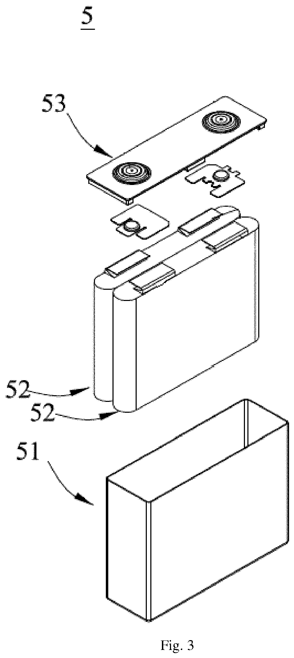

In a particular embodiment of the application, the electrochemical device is a lithium ion battery. Fig. 2 is a perspective view of an embodiment of a lithium ion battery 5. Fig. 3 is an exploded view of Fig.2. Referring to Fig. 2 and Fig. 3, a lithium ion battery 5 includes a case 51, an electrode assembly 52, a top cover assembly 53, and an electrolyte (not shown).

The electrode assembly 52 is packed in the case 51. The number of electrode assembly 52 is not limited and may be one or more. The electrode assembly 52 includes a positive electrode plate, a negative electrode plate, and a separator. The separator separates the positive electrode plate from the negative electrode plate. The electrolyte is injected into the case 51 and impregnates the electrode assembly 52, which includes, for example, a first electrode plate, a second electrode plate and a separator.

Please be noted that the lithium ion battery 5 shown in Fig. 2 is a can-type battery, but is not limited thereto. The lithium ion battery 5 may be a pouch-type battery, i.e. the case 51 is replaced by a metal plastic film and the top cover assembly 53 is eliminated.

Next, a battery module of still another aspect of the present application will be described.

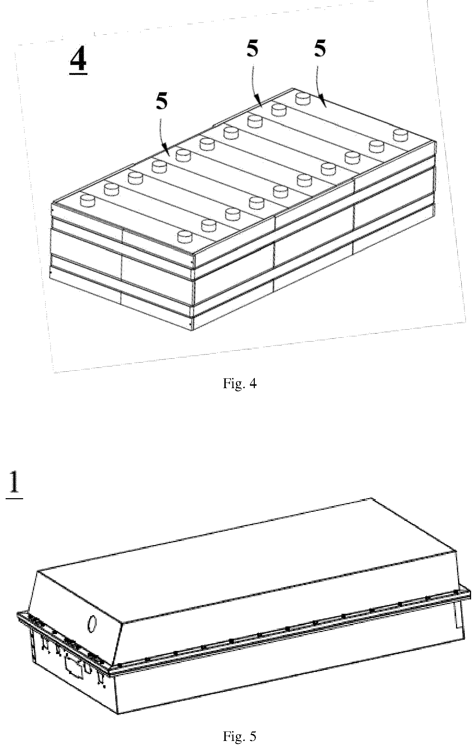

Fig. 4 is a perspective view of an embodiment of the battery module 4.

The battery module 4 provided by the embodiment of the present application includes the lithium ion battery 5 according to the present application.

Referring to Fig. 4, the battery module 4 includes a plurality of batteries 5. A plurality of lithium ion batteries 5 are arranged in the longitudinal direction. The battery module 4 can function as a power source or an energy storage device. The number of the lithium ion batteries 5 in the battery module 4 can be adjusted according to the application and capacity of the battery module 4.

Next, a battery pack of still another aspect of the present application will be described.

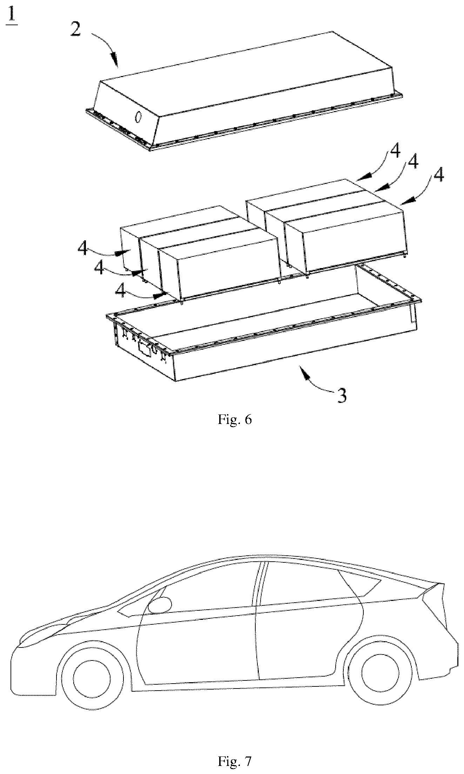

Fig. 5 is a perspective view of an embodiment of the battery pack 1. Fig. 6 is an exploded view of Fig. 5. The battery pack 1 provided by the present application includes the battery module 4 according to an embodiment of the present application.

Specifically, referring to Fig. 5 and Fig. 6, the battery pack 1 includes an upper cabinet body 2, a lower cabinet body 3, and a battery module 4. The upper cabinet body 2 and the lower cabinet body 3 are assembled together and form a space in which the battery module 4 is packed. The battery module 4 is placed in the space of the upper cabinet body 2 and the lower cabinet body 3 which are assembled together. The output polar of the battery module 4 is passed between one or both of the upper cabinet body 2 and the lower cabinet body 3 to supply power to the outside or to be externally charged. The number and arrangement of the battery modules 4 used in the battery pack 1 can be determined according to actual needs.

Next, a device of still another aspect of the present application will be described.

Fig. 7 is a schematic view showing an embodiment of a device wherein a lithium ion battery is used as a power source.

The device provided by the present application includes the lithium ion battery 5 according to an embodiment of the present application, and the lithium ion battery 5 can be used as a power source of the device. In Fig. 7, the device using the lithium ion battery 5 is an electric car. Apparently, it is not limited thereto, and the device using the lithium ion battery 5 may be any electric vehicles (for example, an electric bus, an electric tram, an electric bicycle, an electric motorcycle, an electric scooter, an electric golf cart, an electric truck) other than the electric car, electric ships, electric tools, electronic equipment and energy storage systems. The electric vehicle can be a pure electric vehicle, a hybrid electric vehicle, or a plug-in hybrid electric vehicle. Apparently, according to the actual form of use, the device provided by the present application may include the battery module 4 described in the present application. Apparently, the device provided by the present application may also include the battery pack 1 described in the present application.

Those skilled in the art will appreciate that various definitions or preferred ranges of the components, component amounts, and material physicochemical properties of the safety coating according to the various embodiments of the present application as mentioned above can be combined arbitrarily. The combined embodiments are still within the scope of the invention and are considered as part of the disclosure.

### Examples

In order to make the objects, the technical solutions and the beneficial technical effects of the present application more clear, the present application will be described in further detail below with reference to the embodiments. However, it is to be understood that embodiments of the present application are only intended to be illustrative of the present application, and are not intended to limit the application, and embodiments of the present application are not limited to those embodiments given in the specification. The experimental conditions not indicated in the examples refer to conventional conditions, or the conditions recommended by the material supplier or equipment supplier.

### 1. Preparation method

### 1.1 Preparation of positive electrode plate

### 1) Safety coating

Depending on whether or not the polymer matrix material in the safety coating is subjected to crosslinking treatment, the safety coating was prepared by one of the following two methods.

For the polymer matrix without cross-linking treatment:
A certain ratio of a polymer matrix material, a conductive material, and an inorganic filler were mixed with N-methyl-2-pyrrolidone (NMP) as a solvent with stirring uniformly. The resulting mixture was then coated on both sides of metal current collector, followed by drying at 85°C to obtain a PTC layer, i.e. a safety coating.

For the polymer matrix with cross-linking treatment:
A certain ratio of a polymer matrix material, a conductive material, and an inorganic filler were mixed with N-methyl-2-pyrrolidone (NMP) as a solvent with stirring uniformly and then an activator (sodium silicate) and a crosslinking agent were added with stirring uniformly. The resulting mixture was then coated on both sides of metal current collector, followed by drying at 85°C to obtain a safety coating.

### 2) Positive electrode active material layer

Then, 90 wt% of a positive electrode active material, 5 wt% of SP, and 5 wt% of PVDF were mixed with NMP as a solvent with stirring uniformly. The resulting mixture was then coated on the safety coating of the current collector as prepared according to the above method followed by drying at 85°C to obtain a positive electrode active material layer.

### 3) Work up

Then, the current collector with safety coating and positive electrode active material was cold-pressed, then trimmed, cut, and stripped, followed by drying under vacuum at 85°C for 4 hours. After welding electrode tab, the positive electrode plate meeting the requirements of the secondary battery was obtained.

The main materials used in the specific examples of the safety coating were as follows:
Polymer matrix: PVDF (Manufacturer "Solvay", model 5130), PVDC;
Crosslinking agent: acrylonitrile, tetraisocyanate, polyethylene glycol;
Conductive material (conductive agent): Super-P (TIMCAL, Switzerland, abbreviated as SP);
Inorganic filler: alumina, lithium iron phosphate (abbreviated as LFP), carbon coating modified lithium iron phosphate (abbreviated as LFP/C), carbon coating modified lithium titanate (abbreviated as Li₄Ti₅O₁₂/C); Positive electrode active material: NCM811 (LiNi_{0.8}Co_{0.1}Mn_{0.1}O₂).

The above materials were commonly used materials in the lithium battery industry which may be commercially available from the corresponding suppliers.

### 1.2 Preparation of negative electrode plate

Negative electrode plate was prepared as follows: active material graphite, conductive agent Super-P, thickener CMC, binder SBR were added to deionized water as a solvent at a mass ratio of 96.5:1.0:1.0:1.5 to form an anode slurry; then the slurry was coated on the surface of the negative electrode metal current collector in the form of copper foil, and dried at 85°C, then trimmed, cut, and stripped, followed by drying under vacuum at 110°C for 4 hours. After welding electrode tab, the negative electrode plate meeting the requirements of the secondary battery was obtained.

### 1.3 Preparation of electrolyte

Ethylene carbonate (EC), ethyl methyl carbonate (EMC), and diethyl carbonate (DEC) were mixed at a volume ratio of 3:5:2 to obtain a mixed solvent of EC/EMC/DEC, followed by dissolving the fully dried lithium salt LiPF₆ into the mixed solvent at a concentration of 1 mol/L to prepare an electrolyte.

### 1.4 Preparation of the battery

A polypropylene film with a thickness of 12 µm was used as a separator, and the positive electrode plate, the separator and the negative electrode plate were stacked in order, so that the separator was sandwiched in between the positive electrode plate and the negative electrode plate, and then the stack was wound into a bare battery core. After vacuum baking at 75°C for 10 h, the electrolyte (prepared as described in "Preparation of electrolyte" above) was injected therein followed by vacuum package and standing for 24 h, to obtain a battery cell. After that, the battery cell was charged to 4.2 V with a constant current of 0.1 C, and then was charged with a constant voltage of 4.2 V until the current dropped to 0.05C, and then was discharged to 3.0V with a constant current of 0.1C. Above charging and discharging processes were repeated twice. Finally, the battery cell was charged to 3.8V with a constant current of 0.1C, thereby completing the preparation of the secondary battery.

### 2. Tests for material performance

In each of the examples and comparative examples, the physical property parameters of the materials were measured by a commonly known method in the art, unless otherwise specified.

Some specific parameters were tested using the following methods.

### 2.1 Elongation at break of current collector

Two samples having a length of 200 mm and a width of 15 mm were taken from the current collector. For each sample, the values of the thickness h (µm) of sample were measured by using a micrometer. The sample was then mounted on a tensile machine (model AI7000) and stretched at a speed of 50 mm/min. The average of the two tests was used as the test result. The initial length L0 was recorded. The tensile machine was started, until the sample broke. The displacement L1 of the sample at the time of the break was read from the tensile machine. Elongation at break = (L1-L0)/L0 ^{∗} 100%.

### 2.2 Thickness of the current collector and thickness of the coating

Thickness of the current collector was measured by a micrometer, and the average value of 5 points was used. Thickness of the coating: first measure the thickness of the current collector, and then measure the total thickness after coating, and calculate the difference between the two values as the coating thickness.

### 2.3 Cracking of the coating

After drying and obtaining a positive electrode active material layer, if no cracks were observed in the 100 m² electrode plate, it was defined as no cracking; if the number of occurrences of cracks in 100 m² electrode plate was ≤3, it was defined as mild cracking; if the number of occurrences of cracks in 100 m² electrode plate was >3, it was defined as severe cracking.

### 3. Tests for battery performance

The safety performance of the secondary batteries from various examples and comparative examples were evaluated using GBT31485-2015 "Safety Requirements and Test Methods for Traction Battery of Electric Vehicle", and the test results were recorded.

### 3.1 Puncture test:

The secondary battery was fully charged to the charging cut-off voltage with a current of 1 C, and then charged with a constant voltage until the current dropped to 0.05 C. After that, charging was terminated. A high temperature resistant steel needle of ϕ 5-10 mm (the tip thereof had a cone angle of 45°) was used to puncture the battery plate at a speed of 25mm/s in the direction perpendicular to the battery plate. The puncture position should be close to the geometric center of the surface to be punctured, the steel needle stayed in the battery, and then observation was made to see if the battery had an indication of burning or exploding.

### 3.2 Overcharge test:

The secondary battery was fully charged to the charging cut-off voltage with a current of 1 C, and then charged with a constant voltage until the current dropped to 0.05 C. After that, charging was terminated. Then, after charging with a constant current of 1 C to reach a voltage of1.5 times the charging cut-off voltage or after charging for 1 hour, the charging was terminated.

### 3.3 Cycle performance test:

The test conditions of the cycle number were as follows: the secondary battery was subjected to a 1C/1C cycle test at 25°C in which the charging and discharging voltage range was 2.8 to 4.2 V. The test was terminated when the capacity was attenuated to 80% of the first discharging specific capacity.

### 3.4 PTC effect test

The secondary battery was fully charged to the charging cut-off voltage with a current of 1 C, and then charged with a constant voltage until the current was reduced to 0.05 C. After that, the charging was terminated and the DC resistance of the battery cell was tested (discharging with a current of 4 C for 10 s). Then, the battery cell was placed at 130°C for 1 h followed by testing the DC resistance, and calculating the DC resistance growth rate. Then, the battery cell was placed at 130°C for 2 h followed by testing the DC resistance, and calculating the DC resistance growth rate.

### 3.5 DCR test

The secondary battery was adjusted to 50% SOC with a current of 1 C at 25°C, and the voltage U1 was recorded. Then, it was discharged with a current of 4 C for 30 seconds, and the voltage U2 was recorded. DCR = (U1-U2)/4C.

In this application, for convenience of comparison, the DCR of the battery cell with uncrosslinked PVDF matrix was used as a reference, and was recorded as 100%, and the DCR of the other battery cells and the ratios thereof were calculated and recorded.

### 4. Performance test results

### 4.1 Protection Performance (PTC effect) of safety coating and effect thereof on battery performance

In order to confirm the protection performance of safety coating, the corresponding safety coatings, positive electrode plates, negative electrode plates and batteries were prepared with the specific materials and amounts listed in Table 1-1 below according to the methods and procedures described in "1. Preparation method", and were tested according to the method specified in "3. Tests for battery performance". In order to ensure accuracy of data, 4 samples were prepared for each battery (10 samples for the puncture test) and tested independently. The test results were finally averaged and shown in Tables 1-2 and 1-3. All examples in tables 1-1 through table 1-3 are provided for reference and are not according to the present invention.

In the test, the conventional electrode plate CPlate P was prepared with the method described in "1.1 Preparation of positive electrode plate", but the safety coating was not provided. That is to say, a positive electrode active material was directly applied over the current collector. The conventional electrode plate Cplate N was prepared according to the method described in "1.2 Preparation of negative electrode plate".

**Table 1-1. Compositions of electrode plate**

| | Current collector | Positive electrode active material | Composition of the safety coating | | | | | | |
|---|---|---|---|---|---|---|---|---|---|
| | | | Polymer matrix | | Conductive material | | Inorganic filler | | Thickness H of safety coating (µm) |
| | | | material | wt% | material | wt% | material | wt% | |
| CPlate P | Al foil | NCM811 | / | / | / | / | / | / | / |
| Comp. Plate CP | Al foil | NCM811 | uncrosslinked PVDF | 90 | SP | 10 | / | / | 20 |
| Plate 1 | Al foil | NCM811 | uncrosslinked PVDC | 35 | SP | 10 | alumina | 55 | 10 |
| Plate 2 | Al foil | NCM811 | uncrosslinked PVDF | 35 | SP | 10 | LFP | 55 | 3 |

**Table 1-2. Performance of lithium ion battery**

| Battery No. | Positive electrode plate | Negative electrode plate | Puncture Test |
|---|---|---|---|
| Battery 1 | CPlate P | CPlate N | 10 fail |
| Battery 2 | Comp. Plate CP | CPlate N | 2 pass, 8 fail |
| Battery 3 | Plate 1 | CPlate N | 10 pass |
| Battery 4 | Plate 2 | CPlate N | 10 pass |

**Table 1-3. Performance of lithium ion battery**

| Battery No. | Positive electrode | Negative electrode | DC resistance growth rate@130°C, 1h | DC resistance growth rate@130°C, 2h |
|---|---|---|---|---|
| Battery 2 | Comp. Plate CP | CPlate N | 20% | 30% |
| Battery 4 | Plate 2 | CPlate N | 1200% | 1500% |

The data in Table 1-1 and Table 1-2 indicated that the safety coating with PVDF or PVDC as a polymer matrix significantly improves the safety performance of the battery during nail penetration, especially in the case that an inorganic filler is added. The growth rate results of DCR data in Table 1-3 indicated that the safety coating composed of PVDF and a conductive material does have a PTC effect, and the addition of the inorganic filler significantly improves the growth rate of DCR of the battery at a high temperature, that is, the PTC effect is more remarkable.

### 4.2 Effect of the content of each component contained in the safety coating

In order to further study the effect of the content of each component contained in the safety coatings, the corresponding safety coatings, positive electrode plates, negative electrode plates and batteries were prepared with the specific materials and amounts listed in Table 2-1 below according to the methods and procedures described in "1. Preparation method", and then were tested according to the method specified in "3. Tests for battery performance". In order to ensure the accuracy of data, 4 samples were prepared for each battery (10 samples for the puncture test) and tested independently. The test results were finally averaged and shown in Table 2-2. All examples in tables 2-1 through table 2-2 are provided for reference and are not according to the present invention.

**Table 2-1. Compositions of electrode plate**

| | Current collector | Positive electrode active material | Composition of the safety coating | | | | | | |
|---|---|---|---|---|---|---|---|---|---|
| | | | Polymer matrix | | Conductive material | | Inorganic filler | | Thickness H of safety coating (µm) |
| | | | material | wt% | material | wt% | material | wt% | |
| Comp. Plate 2-1 | Al foil | NCM811 | uncrosslinked PVDF | 75 | SP | 20 | alumina | 5 | 8 |
| Plate 2-2 | Al foil | NCM811 | uncrosslinked PVDF | 75 | SP | 15 | alumina | 10 | 8 |
| Plate 2-3 | Al foil | NCM811 | uncrosslinked PVDF | 75 | SP | 10 | alumina | 15 | 8 |
| Plate 2-4 | Al foil | NCM811 | uncrosslinked PVDF | 60 | SP | 10 | alumina | 30 | 8 |
| Plate 2-5 | Al foil | NCM811 | uncrosslinked PVDF | 60 | SP | 8 | alumina | 32 | 8 |
| Plate 2-6 | Al foil | NCM811 | uncrosslinked PVDF | 55 | SP | 15 | alumina | 30 | 8 |
| Plate 2-7 | Al foil | NCM811 | uncrosslinked PVDF | 50 | SP | 25 | alumina | 25 | 8 |
| Plate 2-8 | Al foil | NCM811 | uncrosslinked PVDF | 40 | SP | 15 | alumina | 45 | 8 |
| Plate 2-9 | Al foil | NCM811 | uncrosslinked PVDF | 35 | SP | 5 | alumina | 60 | 8 |
| Comp. Plate 2-10 | Al foil | NCM811 | uncrosslinked PVDF | 25 | SP | 5 | alumina | 70 | 8 |

**Table 2-2: Performance of lithium ion batteries**

| Battery | Positive electrode | Negative electrode | Puncture Test | Cycle Life (cycle) |
|---|---|---|---|---|
| Battery6 | Comp. Plate 2-1 | CPlate N | 5 fail, 5 pass | 2502 |
| Battery7 | Plate 2-2 | CPlate N | 10 pass | 2351 |
| Battery8 | Plate 2-3 | CPlate N | 10 pass | 2205 |
| Battery9 | Plate 2-4 | CPlate N | 10 pass | 2251 |
| Battery 10 | Plate 2-5 | CPlate N | 10 pass | 2000 |
| Battery 11 | Plate 2-6 | CPlate N | 10 pass | 2408 |
| Battery 12 | Plate 2-7 | CPlate N | 10 pass | 2707 |
| Battery 13 | Plate 2-8 | CPlate N | 10 pass | 2355 |
| Battery 14 | Plate 2-9 | CPlate N | 10 pass | 1800 |
| Battery 15 | Comp. Plate 2-10 | CPlate N | 4 fail, 6 pass | 1715 |

The data in Table 2-1 and Table 2-2 show that: (1) If the content of the inorganic filler is too low, then the stability of the safety coating is not high enough, so safety performance of the battery cannot be fully improved; if the content of the inorganic filler is too high, then the content of the polymer matrix is too low, so that the effect of the safety coating cannot be secured; (2) the conductive material has a great influence on the internal resistance and polarization of the battery, so it would affect the cycle life of the battery. The higher the content of the conductive material, the smaller the internal resistance and polarization of the battery, so that the cycle life will be better.

It had been found through experiments that the appropriate content range of each component in the safety coating is as follows:
35% to 75% in weight of the polymer matrix;
5% to 25% in weight of the conductive material; and/or
10% to 60% in weight of the inorganic filler.

As long as the content of each component in the safety coating is within the above range, the effect of improving the safety and electrical performance (e.g., cycle performance) of the battery can be achieved.

### 4.3 Effect of the kind of the inorganic filler on battery performance

In order to further study the effect of materials in the safety coating on performance of the electrode plate and the battery, the corresponding safety coatings, positive electrode plates, negative electrode plates and batteries were prepared with the specific materials and amounts listed in Table 3-1 below according to the methods and procedures described in "1. Preparation method", and were tested according to the method specified in "3. Tests for battery performance". In order to ensure accuracy of data, 4 samples were prepared for each battery (10 samples for the puncture test) and tested independently. The test results were finally averaged which were shown in Table 3-2. All examples in tables 3-1 through table 3-2 are provided for reference and are not according to the present invention.

**Table3-1: Compositions of electrode plate**

| | Current collector | Positive electrode active material | Composition of safety coating | | | | | | | |
|---|---|---|---|---|---|---|---|---|---|---|
| | | | Polymer matrix | | Conductive material | | Inorganic filler | | | Thickness H of safety coating (µm) |
| | | | Material | wt% | Material | wt% | Material | wt% | Carbon content (wt%) | |
| Plate 2-41 | Al foil | NCM81 1 | uncrosslinked PVDF | 60 | SP | 10 | alumina | 30 | / | 8 |
| Plate 2-42 | A1 foil | NCM81 1 | uncrosslinked PVDF | 60 | SP | 10 | LFP | 30 | / | 8 |
| Plate 2-43 | A1 foil | NCM81 1 | uncrosslinked PVDF | 60 | SP | 10 | LFP/C | 30 | 1 | 8 |
| Plate 2-44 | A1 foil | NCM81 1 | uncrosslinked PVDF | 60 | SP | 10 | LFP/C | 30 | 2 | 8 |
| Plate 2-45 | A1 foil | NCM81 1 | uncrosslinked PVDF | 60 | SP | 10 | LFP/C | 30 | 3 | 8 |
| Plate 2-46 | Al foil | NCM81 1 | uncrosslinked PVDF | 60 | SP | 10 | Li₄Ti₅O₁₂/C | 30 | 5 | 8 |

**Table 3-2: Performance of lithium ion batteries**

| Battery | Positive electrode | Negative electrode | Puncture Test | Overcharge Test | Cycle test (cycle) |
|---|---|---|---|---|---|
| Battery 46 | Plate2-41 | CPlate N | 10 pass | No pass | 2200 |
| Battery 47 | Plate2-42 | CPlate N | 10 pass | 10 pass | 2300 |
| Battery 48 | Plate2-43 | CPlate N | 10 pass | 10 pass | 2500 |
| Battery 49 | Plate2-44 | CPlate N | 10 pass | 10 pass | 2700 |
| Battery 50 | Plate2-45 | CPlate N | 10 pass | 10 pass | 2900 |
| Battery 51 | Plate2-46 | CPlate N | 10 pass | 10 pass | 3000 |

The data in Tables 3-1 and 3-2 show that compared to other materials (such as alumina), the electrochemically active material significantly improves the overcharge safety performance of the battery. In addition, carbon coating modified electrochemically active material also improves the cycle life of the battery.

### 4.4 Effect of crosslinking on performance of plate and battery

The corresponding safety coatings, positive electrode plates, negative electrode plates and batteries were prepared with the specific materials and amounts listed in Table 4-1 below according to the methods and procedures described above, and were tested according to the specified method to study the effect of the crosslinking on coating cracking and DCR. Plates 2-51, 2-57 and battery 52 in tables 4-1 and 4-2 are comparative examples.

**Table 4-1: Effect of crosslinking agent**

| | Current collecto r | positive electrode active material | Composition of the safety coating | | | | | | | | | Cracking (coating speed 50m/min) |
|---|---|---|---|---|---|---|---|---|---|---|---|---|
| | | | polymer matrix | | conductive material | | Inorganic filler | | Crosslinking agent | | Thickness H of the underlying layer (µm) | |
| | | | material | wt% | material | wt% | material | wt% | type | Ratio to the polymer matrix | | |
| Plate 2-51 | Al foil | NCM811 | uncrosslinked PVDF | 60 | SP | 10 | LFP/C | 30 | No | 0 | 8 | Severe cracking |
| Plate 2-52 | Al foil | NCM811 | crosslinked PVDF | 60 | SP | 10 | LFP/C | 30 | acrylonitrile | 0.01% | 8 | Mild cracking |
| Plate 2-53 | Al foil | NCM811 | crosslinked PVDF | 60 | SP | 10 | LFP/C | 30 | tetraisocyanate | 0.1% | 8 | No cracking |
| Plate 2-54 | Al foil | NCM811 | crosslinked PVDF | 60 | SP | 10 | LFP/C | 30 | polyethylene glycol | 0.5% | 8 | No cracking |
| Plate 2-55 | Al foil | NCM811 | crosslinked PVDF | 60 | SP | 10 | LFP/C | 30 | acrylonitrile | 1.5% | 8 | No cracking |
| Plate 2-56 | Al foil | NCM811 | crosslinked PVDF | 60 | SP | 10 | LFP/C | 30 | acrylonitrile | 5% | 8 | No cracking |
| Plate 2-57 | Al foil | NCM811 | uncrosslinked PVDC | 60 | SP | 10 | LFP/C | 30 | No | No | 8 | Severe cracking |
| Plate 2-58 | Al foil | NCM811 | crosslinked PVDC | 60 | SP | 10 | LFP/C | 30 | acrylonitrile | 3% | 8 | No cracking |

In the case where the coating speed of the positive electrode active material layer was 50 m/min, the polymer matrix of the electrode plate 2-51 was not crosslinked by adding a crosslinking agent, and thus there was a severe cracking on the electrode plate. The addition of a crosslinking agent had a significant effect on improving the cracking of the electrode plate. No cracking occurred in the electrode plate 2-53 to the electrode plate 2-56. Similar experiments were performed for PVDC (electrode plates 2-57 and 2-58) and the results were similar. It can be seen that the addition of the crosslinking agent significantly eliminates the coating cracking of the electrode plate.

**Table 4-2: Performance of lithium ion battery**

| Battery | Positive electrode | Negative electrode | DCR of the battery | Puncture Test |
|---|---|---|---|---|
| Battery 52 | Plate 2-51 | CPlate N | 100% | 10 pass |
| Battery 53 | Plate 2-52 | CPlate N | 80% | 10 pass |
| Battery 54 | Plate 2-53 | CPlate N | 85% | 10 pass |
| Battery 55 | Plate 2-54 | CPlate N | 78% | 10 pass |
| Battery 56 | Plate 2-55 | CPlate N | 75% | 10 pass |
| Battery 57 | Plate 2-56 | CPlate N | 84% | 10 pass |

For the electrode plate 2-51, the polymer matrix was not crosslinked by adding a crosslinking agent, and thus the polymer matrix was swelled greatly in the electrolyte, resulting in a large DCR. The addition of the crosslinking agent can reduce the swelling of the polymer matrix in the electrolyte, and had a significant effect on reducing DCR. It can be seen that the addition of the crosslinking agent can significantly reduce the DCR of the battery.

In addition, the above data indicated that PVDF/PVDC can be used as the polymer matrix of PTC layer regardless of crosslinking or not, and the obtained battery had high safety performance in which the test result of puncture test is excellent, which indicated that the crosslinking treatment did not adversely affect the protective effect of the safety coating. Furthermore, compared with the uncrosslinked PVDC/PVDF, the crosslinking treatment improved the cracking of the electrode plate, from severe cracking to no cracking or mild cracking. The crosslinking treatment reduces the swelling of the polymer matrix in the electrolyte, thereby reducing the DCR by 15% to 25%, thereby improving the electrical performance of the battery.

It will be understood by those skilled in the art that the above implementation examples of plates of this application are only exemplified to be used for a lithium battery, but the plates of this application can also be applied to other types of batteries or electrochemical devices, and still may produce good technical effects of this application.

It will be apparent to those skilled in the art that the present application may be modified and varied in accordance with the above teachings. Accordingly, the present application is not limited to the specific embodiments disclosed and described above, and modifications and variations of the present application are intended to be included within the scope of the claims of the present application. In addition, although some specific terminology is used in this specification, these terms are for convenience of illustration only and are not intended to limit the present application in any way.

## Claims

1. A positive electrode plate, comprising a current collector (10), a positive electrode active material layer (14) and a safety coating (12) disposed between the current collector (10) and the positive electrode active material layer (14); wherein the safety coating (12) comprises a polymer matrix, a conductive material and an inorganic filler; and wherein the polymer matrix is fluorinated polyolefin and/or chlorinated polyolefin having a crosslinked structure,
wherein based on the total weight of the polymer matrix, the conductive material and the inorganic filler as 100%,
the polymer matrix is present in an amount of from 35 wt% to 75 wt%,
the conductive material is present in an amount of from 5 wt% to 25 wt%, and
the inorganic filler is present in an amount of from 10 wt% to 60 wt%,
and the fluorinated polyolefin and/or chlorinated polyolefin having a crosslinked structure by a crosslinking treatment, the crosslinking treatment is achieved by introducing an activator and a crosslinking agent, weight ratio of the activator to the polymer matrix is in the range of 0.5% to 5%, and weight ratio of the crosslinking agent to the polymer matrix is from 0.01% to 5%; and the crosslinking agent is selected from at least one of polyisocyanates, polyamines, polyols, glycidyl ethers, glyoxal, aziridine, inorganic substances, organosilicons, benzenesulfonic acids, olefinically unsaturated compounds, organic peroxides, and metal organic compounds;
wherein the role of the activator is to remove HF or HCl from fluorinated polyolefin and/or chlorinated polyolefin to form a C = C double bond and the role of the crosslinking agent is to crosslink the C=C double bond.

2. The positive electrode plate according to claim 1, wherein the polyisocyanates are selected from at least one of JQ-1, JQ-1E, JQ-2E, JQ-3E, JQ-4, JQ-5, JQ-6, PAPI, emulsifiable MDI, and tetraisocyanate;
the polyamines are selected from at least one of propanediamine and MOCA;
the polyols are selected from at least one of polyethylene glycol, polypropylene glycol, and trimethylolpropane;
the glycidyl ethers are selected from at least one of polypropylene glycol glycidyl ether;
the inorganic substances are selected from at least one of zinc oxide, aluminum chloride, aluminum sulfate, sulfur, boric acid, borax, and chromium nitrate;
the organosilicons are selected from at least one of ethyl orthosilicate, methyl orthosilicate, and trimethoxysilane;
the benzenesulfonic acids are selected from p-toluenesulfonic acid, and p-toluenesulfonyl chloride;
the olefinically unsaturated compounds are selected from at least one of styrene, α-methylstyrene, acrylonitrile, acrylic acid, methacrylic acid, acrylates; more preferably, the acrylates are selected from at least one of 1,4-butylene glycol diacrylate, ethylene glycol dimethacrylate, TAC, butyl acrylate, HEA, HPA, HEMA, HPMA, and MMA;
the organic peroxides are selected from at least one of dicumyl peroxide and bis(2,4-dichlorobenzoyl) peroxide;
the metal organic compounds are selected from at least one of aluminum isopropoxide, zinc acetate, and titanium acetylacetonate; and/or
the weight ratio of the crosslinking agent to the polymer matrix is from 0.01% to 5%.

3. The positive electrode plate according to any one of claims 1 to 2, wherein the polymer matrix is selected from at least one of polyvinylidene fluoride (PVDF), carboxylic acid modified PVDF, acrylic acid modified PVDF, polyvinylidene chloride (PVDC), carboxylic acid modified PVDC, acrylic acid modified PVDC, PVDF copolymers, and PVDC copolymers, all having a crosslinked structure.

4. The positive electrode plate according to any one of claims 1 to 2, wherein the conductive material is selected from at least one of a conductive carbon-based material, a conductive metal material, and a conductive polymer material;
preferably, the conductive carbon-based material is selected from at least one of conductive carbon black, acetylene black, graphite, graphene, carbon nanotubes, and carbon nanofibers;
preferably, the conductive metal material is selected from at least one of Al powder, Ni powder, and gold powder; and
preferably, the conductive polymer material is selected from at least one of conductive polythiophene, conductive polypyrrole, and conductive polyaniline.

5. The positive electrode plate according to any one of claims 1 to 2, wherein the inorganic filler is selected from at least one of metal oxides, a non-metal oxides, metal carbides, non-metal carbides, and inorganic salts, all optionally modified with at least one of a conductive carbon coating, a conductive metal coating or a conductive polymer coating.

6. The positive electrode plate according to claim 5, wherein the inorganic filler is selected from at least one of magnesium oxide, aluminum oxide, titanium dioxide, zirconium oxide, silicon dioxide, silicon carbide, boron carbide, calcium carbonate, aluminum silicate, calcium silicate, potassium titanate, barium sulfate, lithium cobalt oxide, lithium manganese oxide, lithium nickel oxide, lithium nickel manganese oxide, lithium nickel manganese cobalt oxide, lithium nickel manganese aluminum oxide, lithium iron phosphate, lithium vanadium phosphate, lithium cobalt phosphate, lithium manganese phosphate, lithium iron silicate, lithium vanadium silicate, lithium cobalt silicate, lithium manganese silicate, and lithium titanate, all optionally modified with at least one of a conductive carbon coating, a conductive metal coating or a conductive polymer coating;
preferably, the inorganic filler has an average particle size D of 100 nm ≤D≤10 µm wherein the average particle size D is measured as disclosed in the specification, and/or the conductivity σ of the inorganic filler satisfies 10⁻³ S/m ≤ σ ≤ 10² S/m.

7. The positive electrode plate according to any one of claims 1 to 6, wherein the safety coating (12) has a thickness H of 1 µm ≤ H ≤ 20 µm.

8. The positive electrode plate according to any one of claims 1 to 7, wherein the current collector (10) is a porous aluminum-containing current collector.

9. An electrochemical device, comprising the positive electrode plate according to any one of claims 1 to 8, wherein the electrochemical device is a capacitor, a primary battery or a secondary battery.

10. A battery module (4), comprising the battery as described in claim 9.

11. A battery pack (1), comprising the battery module (4) according to claim 10.

12. A device, comprising the battery as defined in claim 9 as a power source of the device, wherein preferably, the device comprises an electric vehicle, a hybrid electric vehicle, or a plug-in hybrid electric vehicle, an electric bicycle, an electric scooter, an electric golf cart, an electric truck, an electric ship, or an energy storage system.

## Patentansprüche

1. Positive Elektrodenplatte, umfassend einen Stromkollektor (10), eine Positivelektroden-Aktivmaterialschicht (14) und eine Sicherheitsbeschichtung (12), die zwischen dem Stromkollektor (10) und der Positivelektroden-Aktivmaterialschicht (14) angeordnet ist; wobei die Sicherheitsbeschichtung (12) eine Polymermatrix, ein leitfähiges Material und einen anorganischen Füllstoff umfasst; und wobei die Polymermatrix fluoriertes Polyolefin und/oder chloriertes Polyolefin mit einer vernetzten Struktur ist,
wobei bezogen auf das Gesamtgewicht der Polymermatrix, des leitfähigen Materials und des anorganischen Füllstoffs 100%,
die Polymermatrix in einer Menge von 35 Gew.-% bis 75 Gew.-% vorhanden ist,
das leitfähige Material in einer Menge von 5 Gew.-% bis 25 Gew.-% vorhanden ist, und
der anorganische Füllstoff in einer Menge von 10 Gew.-% bis 60 Gew.-% vorhanden ist,
und das fluorierte Polyolefin und/oder chlorierte Polyolefin mit einer vernetzten Struktur durch eine Vernetzungsbehandlung, wobei die Vernetzungsbehandlung durch Einführen eines Aktivators und eines Vernetzungsmittels erreicht wird, das Gewichtsverhältnis des Aktivators zur Polymermatrix im Bereich von 0,5% bis 5% liegt und das Gewichtsverhältnis des Vernetzungsmittels zur Polymermatrix 0,01% bis 5% beträgt; und das Vernetzungsmittel aus mindestens einem von Polyisocyanaten, Polyaminen, Polyolen, Glycidylethern, Glyoxal, Aziridin, anorganischen Substanzen, Organosilizium, Benzolsulfonsäuren, olefinisch ungesättigten Verbindungen, organischen Peroxiden und metallorganischen Verbindungen ausgewählt ist;
wobei die Rolle des Aktivators darin besteht, HF oder HCl aus fluoriertem Polyolefin und/oder chloriertem Polyolefin zu entfernen, um eine C=C-Doppelbindung zu bilden, und die Rolle des Vernetzungsmittels darin besteht, die C=C-Doppelbindung zu vernetzen.

2. Positive Elektrodenplatte nach Anspruch 1, wobei die Polyisocyanate aus mindestens einem von JQ-1, JQ-1E, JQ-2E, JQ-3E, JQ-4, JQ-5, JQ-6, PAPI, emulgierbar MDI und Tetraisocyanat ausgewählt sind;
die Polyamine aus mindestens einem von Propandiamin und MOCA ausgewählt sind;
die Polyole aus mindestens einem von Polyethylenglykol, Polypropylenglykol und Trimethylolpropan ausgewählt sind;
die Glycidylether aus mindestens einem von Polypropylenglycolglycidylether ausgewählt sind;
die anorganischen Substanzen aus mindestens einem von Zinkoxid, Aluminiumchlorid, Aluminiumsulfat, Schwefel, Borsäure, Borax und Chromnitrat ausgewählt sind;
die Organosiliciumverbindungen aus mindestens einem von Ethylorthosilicat, Methylorthosilicat und Trimethoxysilan ausgewählt sind;
die Benzolsulfonsäuren aus p-Toluolsulfonsäure und p-Toluolsulfonylchlorid ausgewählt sind;
die olefinisch ungesättigten Verbindungen aus mindestens einem von Styrol, α-Methylstyrol, Acrylnitril, Acrylsäure, Methacrylsäure, Acrylaten ausgewählt sind; stärker bevorzugtdie Acrylate aus mindestens einem von 1,4-Butylenglykoldiacrylat, Ethylenglykoldimethacrylat, TAC, Butylacrylat, HEA, HPA, HEMA, HPMA und MMA ausgewählt sind;
die organischen Peroxide aus mindestens einem von Dicumylperoxid und Bis(2,4-dichlorbenzoyl)peroxid ausgewählt sind;
die metallorganischen Verbindungen aus mindestens einem von Aluminiumisopropoxid, Zinkacetat und Titanacetylacetonat ausgewählt sind; und/oder
das Gewichtsverhältnis des Vernetzungsmittels zur Polymermatrix 0,01% bis 5% beträgt.

3. Positive Elektrodenplatte nach einem der Ansprüche 1 bis 2, wobei die Polymermatrix aus mindestens einem von Polyvinylidenfluorid (PVDF), Carbonsäure-modifiziertem PVDF, Acrylsäuremodifiziertem PVDF, Polyvinylidenchlorid (PVDC), Carbonsäure-modifiziertem PVDC, Acrylsäuremodifiziertem PVDC, PVDF-Copolymer und PVDC-Copolymer ausgewählt ist.

4. Positive Elektrodenplatte nach einem der Ansprüche 1 bis 2, wobei das leitfähige Material aus mindestens einem von einem leitfähigen kohlenstoffbasierten Material, einem leitfähigen Metallmaterial und einem leitfähigen Polymermaterial ausgewählt ist,
leitfähige kohlenstoffbasierte Material vorzugsweise aus mindestens einem von leitfähigem Ruß, Acetylenruß, Graphit, Graphen, Kohlenstoff-Nanoröhren und Kohlenstoff-Nanofasern ausgewählt ist;
leitfähige Metallmaterial vorzugsweise aus mindestens einem von Al-Pulver, Ni-Pulver und Goldpulver ausgewählt ist; und
leitfähige Polymermaterial vorzugsweise aus mindestens einem von leitfähigem Polythiophen, leitfähigem Polypyrrol und leitfähigem Polyanilin ausgewählt ist.

5. Positive Elektrodenplatte nach einem der Ansprüche 1 bis 2, wobei der anorganische Füllstoff aus mindestens einem von Metalloxiden, Nichtmetalloxiden, Metallcarbiden, Nichtmetallcarbiden und anorganischen Salzen ausgewählt ist, die alle optional mit mindestens einer von einer leitfähigen Kohlenstoffbeschichtung, einer leitfähigen Metallbeschichtung oder einer leitfähige Polymerbeschichtung modifiziert sind.

6. Positive Elektrodenplatte nach Anspruch 5, wobei der anorganische Füllstoff aus mindestens einem von Magnesiumoxid, Aluminiumoxid, Titandioxid, Zirkoniumoxid, Siliziumdioxid, Siliziumkarbid, Borkarbid, Calciumcarbonat, Aluminiumsilikat, Calciumsilikat, Kaliumtitanat, Bariumsulfat, Lithiumkobaltoxid , Lithium-Mangan-Oxid, Lithium-Nickel-Oxid, Lithium-Nickel-Mangan-Oxid, Lithium-Nickel-Mangan-Kobalt-Oxid, Lithium-Nickel-Mangan-Aluminiumoxid, Lithium-Eisen-Phosphat, Lithium-Vanadium-Phosphat, Lithium-Kobalt-Phosphat, Lithium-Mangan-Phosphat, Lithium-Eisen-Silikat, Lithium-Vanadium-Silikat, Lithiumkobaltsilikat, Lithiummangansilikat und Lithiumtitanat ausgewählt ist, die alle optional mit mindestens einer von einer leitfähigen Kohlenstoffbeschichtung, einer leitfähigen Metallbeschichtung oder einer leitfähigen Polymerbeschichtung modifiziert sind;
vorzugsweise der anorganische Füllstoff eine durchschnittliche Teilchengröße D von 100 nm ≤ D ≤ 10 µm aufweist, wobei die durchschnittliche Teilchengröße D wie in der Beschreibung offenbart gemessen wird, und/oder die Leitfähigkeit σ des anorganischen Füllstoffs 10⁻³ S/m ≤ σ ≤ 10² S/m erfüllt.

7. Positive Elektrodenplatte nach einem der Ansprüche 1 bis 6, wobei die Sicherheitsbeschichtung (12) eine Dicke H von 1 µm ≤ H ≤ 20 µm aufweist.

8. Positive Elektrodenplatte nach einem der Ansprüche 1 bis 7, wobei die Sicherheitsbeschichtung (10) eine Dicke H von 1 µm ≤ H ≤ 20 µm aufweist.

9. Elektrochemische Vorrichtung, umfassend die positive Elektrodenplatte nach einem der Ansprüche 1 bis 8, die ein Kondensator, eine Primärbatterie oder eine Sekundärbatterie ist.

10. Batteriemodul (4), umfassend die Batterie (5) nach Anspruch 9.

11. Batteriepack (1), umfassend das Batteriemodul nach Anspruch 10.

12. Vorrichtung, umfassend die Batterie nach Anspruch 9 als Energiequelle der Vorrichtung, wobei die Vorrichtung vorzugsweise ein Elektrofahrzeug, ein Hybridelektrofahrzeug oder ein Plug-in-Hybridelektrofahrzeug, ein Elektrofahrrad, einen Elektroroller, einen Elektrogolfwagen, einen Elektrolastwagen, ein Elektroschiff oder ein Energiespeichersystem umfasst.

## Revendications

1. Plaque d'électrode positive, comprenant un collecteur de courant (10), une couche de matériau actif d'électrode positive (14) et un revêtement de sécurité (12) appliqué entre le collecteur de courant (10) et la couche de matériau actif d'électrode positive (14), dans laquelle le revêtement de sécurité (12) comprend une matrice polymère, un matériau conducteur et une charge inorganique ; et dans laquelle la matrice polymère est en polyoléfine fluorée et/ou polyoléfine chlorée ayant une structure réticulée,
dans laquelle par rapport au poids total de la matrice polymère, le pourcentage du matériau conducteur et de la charge inorganique représentent est de 100 %,
la teneur en matrice polymère est de 35 % à 75 % en poids,
la teneur en matériau conducteur est de 5 % à 25 % en poids, et
la teneur en charge inorganique est de 10 % à 60 % en poids,
et la polyoléfine fluorée et/ou la polyoléfine chlorée ayant une structure réticulée par traitement de réticulation, le traitement de réticulation est réalisé en introduisant un activateur et un agent de réticulation, le rapport en poids de l'activateur à la matrice polymère est compris dans une plage de 0,5 % à 5 %, et le rapport en poids de l'agent de réticulation à la matrice polymère est de 0,01 % à 5 % ; et l'agent de réticulation est au moins un choisi parmi les polyisocyanates, les polyamines, les polyols, les éthers glycidyliques, le glyoxal, l'aziridine, les substances inorganiques, les organosiliciums, les acides benzènesulfoniques, les composés oléfiniques insaturés, les peroxydes organiques et les composés organométalliques ;
dans laquelle l'activateur joue un rôle d'éliminer HF ou HCl de la polyoléfine fluorée et/ou de la polyoléfine chlorée de sorte de former une double liaison C=C et l'agent de réticulation joue un rôle de réticuler la double liaison C=C.

2. Plaque d'électrode positive selon la revendication 1, dans laquelle les polyisocyanates sont au moins un choisi parmi JQ-1, JQ-1E, JQ-2E, JQ-3E, JQ-4, JQ-5, JQ-6, PAPI, MDI émulsifiable et le tétraisocyanate ;
les polyamines est au moins un choisi parmi le propanediamine et MOCA ;
les polyols sont au moins un choisi parmi le polyéthylène glycol, le polypropylène glycol et le triméthylolpropane ;
les éthers glycidyliques sont au moins un choisi parmi l'éther glycidylique de polypropylène glycol ;
les substances inorganiques sont au moins un choisi parmi l'oxyde de zinc, le chlorure d'aluminium, le sulfate d'aluminium, le soufre, l'acide borique, le borax et le nitrate de chrome ;
les organosiliciums sont au moins un choisi parmi l'orthosilicate d'éthyle, l'orthosilicate de méthyle et le triméthoxysilane ;
les acides benzènesulfoniques sont au moins un choisi parmi l'acide p-toluènesulfonique et le chlorure de p-toluènesulfonyle;
les composés oléfiniquement insaturés sont au moins un choisi parmi le styrène, l'alpha-méthylstyrène, l'acrylonitrile, l'acide acrylique, l'acide méthacrylique, les acrylates ; de plus préférence, les acrylates sont au moins un choisi parmi le diacrylate de 1,4-butylène glycol, le diméthacrylate d'éthylène glycol, TAC, l'acrylate de butyle, HEA, HPA, HEMA, HPMA et MMA ;
les peroxydes organiques sont au moins un choisi parmi le peroxyde de dicumyle et le peroxyde de bis(2,4-dichlorobenzoyle);
les composés organométalliques sont au moins un choisi parmi l'isopropoxyde d'aluminium, l'acétate de zinc et l'acétylacétonate de titane ; et/ou
le rapport en poids de l'agent de réticulation à la matrice polymère est de 0,01 % à 5 %.

3. Plaque d'électrode positive selon la revendication 1 ou 2, dans laquelle la matrice polymère est au moins un choisi parmi le fluorure de polyvinylidène (PVDF), le PVDF modifié par l'acide carboxylique, le PVDF modifié par l'acide acrylique, le chlorure de polyvinylidène (PVDC), le PVDC modifié par l'acide carboxylique, le PVDC modifié par l'acide acrylique, des copolymères PVDF, des copolymères PVDC, qui ont chacun une structure réticulée.

4. Plaque d'électrode positive selon l'une quelconque des revendications 1 à 2, dans laquelle le matériau conducteur est au moins un choisi parmi un matériau conducteur à base de carbone, un matériau métallique conducteur et un matériau polymère conducteur ;
de préférence, le matériau conducteur à base de carbone est au moins un choisi parmi le noir de charbon conducteur, le noir d'acétylène, le graphite, le graphène, les nanotubes de carbone et les nanofibres de carbone ;
de préférence, le matériau métallique conducteur est au moins un choisi parmi la poudre d'Al, la poudre de Ni et la poudre d'or ; et
de préférence, le matériau polymère conducteur est au moins un choisi parmi le polythiophène conducteur, le polypyrrole conducteur et la polyaniline conductrice.

5. Plaque d'électrode positive selon l'une quelconque des revendications 1 à 2, dans laquelle la charge inorganique est au moins un choisie parmi des oxydes métalliques, des oxydes non métalliques, des carbures métalliques, des carbures non métalliques et des sels inorganiques, éventuellement qui sont tous modifiés avec au moins un parmi un revêtement de carbone conducteur, un revêtement métallique conducteur ou un revêtement polymère conducteur.

6. Plaque d'électrode positive selon la revendications 5, dans laquelle la charge inorganique est au moins un choisie parmi l'oxyde de magnésium, l'oxyde d'aluminium, le dioxyde de titane, l'oxyde de zirconium, le dioxyde de silicium, le carbure de silicium, le carbure de bore, le carbonate de calcium, le silicate d'aluminium, le silicate de calcium, le titanate de potassium, le sulfate de baryum, l'oxyde de lithium-cobalt, l'oxyde de lithium-manganèse, l'oxyde de lithium-nickel, l'oxyde de lithium-nickel-manganèse, l'oxyde de lithium-nickel-manganèse-cobalt, l'oxyde de lithium-nickel-manganèse aluminium, le phosphate de lithium-fer, le phosphate de lithium-vanadium, le phosphate de lithium-cobalt, le phosphate de lithium-manganèse, le silicate de lithium-fer, le silicate de lithium-vanadium, le silicate de lithium-cobalt, le silicate de lithium-manganèse et le titanate de lithium, éventuellement qui sont tous modifiés avec au moins un parmi un revêtement de carbone conducteur, un revêtement métallique conducteur ou un revêtement polymère conducteur ;
de préférence, la charge inorganique a une taille des particules moyenne D de 100 nm≤D≤10 µm, dans laquelle la taille des particules moyenne est mesurée comme décrit dans la description, et/ou la conductivité σ de la charge inorganique satisfait à 10⁻³ S/m≤σ≤10² S/m.

7. Plaque d'électrode positive selon l'une quelconque des revendications 1 à 6, dans laquelle le revêtement de sécurité (12) a une épaisseur H de 1 µm≤H≤20 µm.

8. Plaque d'électrode positive selon l'une quelconque des revendications 1 à 7, dans laquelle le collecteur de courant (10) est un collecteur de courant poreux à aluminium.

9. Dispositif électrochimique, comprenant la plaque d'électrode positive selon l'une quelconque des revendications 1 à 8, dans lequel le dispositif électrochimique est un condensateur, une batterie primaire ou une batterie secondaire.

10. Module de batterie (4), comprenant la batterie selon la revendication 9.

11. Bloc de batteries (1), comprenant le module de batterie (4) selon la revendication 10.

12. Dispositif, comprenant la batterie selon la revendication 9 en tant que source de puissance du dispositif, dans lequel de préférence, le dispositif comprend un véhicule électrique, un véhicule électrique hybride ou un véhicule électrique hybride rechargeable, un vélo électrique, un scooter électrique, une voiturette de golf électrique, un camion électrique, des bateaux électriques ou des systèmes de stockage d'énergie.
